# NEUE EUROPÄISCHE PATENTSCHRIFT

(11) **EP 1 734 311 B2**
(45) Veröffentlichungstag und Bekanntmachung des Hinweises auf die Entscheidung über den Einspruch: **20.07.2016**
(45) Hinweis auf die Patenterteilung: 06.10.2010
(21) Anmeldenummer: 05013105.1
(22) Anmeldetag: 17.06.2005
(51) Int. Cl.: F24D 10/00, F24D 19/10, F24D 3/10

(54) **Wärmetauschereinrichtung mit Plattenwärmetauscher und Strahlpumpe**
Heat exchange arrangement with plate heat exchanger and jet pump
Dispositif échangeur de chaleur avec échangeur de chaleur à plaques et pompe à jet

(43) Veröffentlichungstag der Anmeldung: 20.12.2006
(73) Patentinhaber: Helmut Bälz GmbH, D-74076 Heilbronn (DE)
(72) Erfinder: Bälz, Uwe, Prof.-Dr., 80687 München (DE)
(74) Vertreter: Rüger, Barthelt & Abel

(56) Entgegenhaltungen:
- EP-A- 0 087 495
- CA-A1- 2 416 353
- DE-A1- 1 601 157
- DE-A1- 1 952 166
- DE-A1- 19 526 462
- DE-A1- 19 620 601
- DE-B1- 2 809 105
- DE-C2- 2 305 032
- DE-C2- 2 722 890
- DE-C2- 2 920 923
- DE-C2- 19 642 179
- DE-U1- 29 617 756
- DE-U1- 29 918 494

## Beschreibung

Die Erfindung betrifft eine Wärmetauschereinrichtung, die insbesondere für Wärmeverteilungsanlagen ausgebildet ist, bei denen als Wärmeträger Heißwasser dient.

Heißwasser-Wärmeverteilungsanlagen nutzen als primären Wärmeträger unter Druck stehendes heißes Wasser mit Temperaturen von bis zu 200 °C und darüber. Das Heißwasser steht dabei unter einem Druck von beispielsweise 20 bar oder auch mehr. In dieser Form kann es nicht zur Beheizung von kleineren Wärmeverbrauchern, beispielsweise in Wohnungen oder Geschäftsräumen dienen. Deshalb werden in der Regel Wärmetauscher eingesetzt, die in einem Primärkreislauf zirkulierendes, unter niedrigem Druck stehendes Wasser erwärmen. Dieses hat eine Vorlauftemperatur von z.B. max. 90°C, so dass es selbst bei lediglich atmosphärischem Druck nicht siedet. An den Plattenwärmetauschern ergibt sich deshalb eine relativ große Temperaturspreizung von über 100°C. Im Teillastbetrieb wird das Problem noch gravierender. Die Vorlauftemperaturen des Sekundärkreises liegen dann deutlich unter 90°C, wobei primärseitig noch immer das unter Druck stehende Heißwasser von beispielsweise 200°C ansteht. Dabei ist jedoch weder die Primärtemperatur noch der Primärdruck konstant. Vielmehr sind die Heizwerke, die das Heißwasser herstellen, darauf eingerichtet, in Spitzenzeiten den Druck und die Temperatur des Heißwassers zu erhöhen und in Schwachlastzeiten abzusenken. Die primärseitigen Temperatur- und Druckschwankungen verbunden mit dem an dem Wärmetauscher entstehenden extremen Temperaturgradienten insbesondere bei Teil- oder Schwachlast führen meist zu einem sehr schnellen Verschleiß der Plattenwärmetauscher.

Plattenwärmetauscher bestehen aus einer Anzahl von lamellenartigen Platten, zwischen denen spaltförmige Kanäle ausgebildet sind. Die Platten sind randseitig miteinander verschweißt. Aufgrund der großen Temperaturänderungen und Druckänderungen können sich die Platten verwerfen, wobei letztendlich die Schweißnähte an den Plattenrändern undicht werden. Sowohl der Übertritt von Heißwasser in den Sekundärkreis als auch der Austritt von Primär- oder Sekundärwasser aus dem Plattenwärmetauscher nach außen, stellt eine Havarie dar, die das Abschalten des Plattenwärmetauschers und die Reparatur oder den Austausch desselben zur Folge hat. Dies gilt es zu vermeiden. Plattenwärmetauscher sind temperatur- und druckempfindliche Bauelemente. Andererseits sind sie kostengünstig und bieten einen guten Wärmeübergang bei kleinem Bauvolumen.

Aus der EP 0 087 495 wie auch der DE 195 26 462 ist es bekannt, das Heizungsregulierventil eines Heizkörpers durch eine Strahlpumpe zu ersetzten, um im Teillastbetrieb den Massenstrom in dem Heizkörper zu erhöhen. Diese Maßnahme hat eine Vergleichmäßigung der Temperaturverteilung an dem Heizkörper zur Folge. Sie verhindert jedoch nicht das Auftreten großer Temperaturgradienten im Volllastbetrieb.

Davon ausgehend ist es Aufgabe der Erfindung, eine verbesserte Wärmetauschereinrichtung zu schaffen.

Diese Aufgabe wird mit der Wärmetauschereinrichtung gemäß Anspruch 1 gelöst:
Die erfindungsgemäße Wärmetauschereinrichtung weist einen Plattenwärmetauscher auf, der primärseitig über eine Strahlpumpe mit einem Wassergemisch versorgt wird, das zum Teil aus Heißwasser und zum Teil aus ausgekühltem Rücklaufwasser besteht. Der den Plattenwärmetauscher primärseitig durchfließende Massenstrom wird dadurch erhöht. Hingegen wird die an dem primären Vorlaufanschluss des Plattenwärmetauschers anstehende Wassertemperatur deutlich, auf beispielsweise näherungsweise konstant 140°C gemindert. Außerdem stellt sich hinter der Strahlpumpe relativ unabhängig von dem an ihrem Eingang anliegenden Vordruck ein näherungsweise konstanter Ausgangsdruck ein. Wenn die Strahlpumpe temperaturgeregelt betrieben wird, ist der an dem primärseitigen Vorlaufanschluss des Wärmetauschers anstehende Druck gleich dem Druck, der Rücklaufleitung zuzüglich des durch die primärseitige Durchströmung des Plattenwärmetauschers hervorgerufenen Druckabfalls Δp. Im Vergleich dazu sind ausgangsseitig geregelte Plattenwärmetauscher allen primärseitigen Druckschwankungen ungemindert unterworfen. Steigt der Primärdruck beispielsweise von 20 bar in Schwachlastzeiten auf 30 bar in Spitzenlastzeiten an, bedeutet dies für den Plattenwärmetauscher normalerweise eine Druckänderung von 10 bar, die eine entsprechende Plattenverformung zur Folge hat. Im erfindungsgemäßen Fall bleibt der Druck jedoch konstant auf z.B. 17 bar +Δp, wobei der Eingangsdruck an dem Eingang der Strahlpumpe unabhängig davon von z.B. 20 bar auf z.B. 30 bar steigen kann. Die Strahlpumpe wirkt wegen des ihr inhärenten Druckregelverhaltens somit als eigensicherer Druckregler. Eine Druckregelung durch einen äußeren Regelkreis ist überflüssig. Damit wird eine Drucküberlastung des Plattenwärmetauschers auch dann ausgeschlossen, wenn z.B. durch Stromausfall die Regelungeeinrichtung der Strahlpumpe inaktiv wird. Erfingdungsgemäß sind auf der Primärseite weder eingangsseitig noch ausgangsseitig Druckregel-, Druckbegrenzungs- oder Mengenbegrenzungsventile erforderlich.

Beide Maßnahmen, nämlich die Verminderung des Temperaturgradienten und die Vermeidung von zeitlichen Druckschwankungen, führen zu einer deutlichen Erhöhung der Lebensdauer des Plattenwärmetauschers.

Die Strahlpumpe gestattet, wie erläutert, die sichere Einhaltung eines ermäßigten Primärdrucks an dem Plattenwärmetauscher. Schwankungen des Primärdrucks sind reduziert. Der gegenüber Systemen ohne Strahlpumpe verminderte Primärdruck und das niedrige Volumen von Plattenwärmetauschern führen selbst bei hoher Leistungseinstufung von z.B. 800 kW zu einem Druck-Liter-Produkt von unter 200. Das Druck-Liter-Produkt von 200 lbar stellt in der Regel die Grenze dar, ab der Druckbehälter abnahmepflichtig werden und einer regelmäßigen Revision unterliegen. Das erfindungsgemäße Konzept der Kombination einer druckmindernden Strahlpumpe mit einem Plattenwärmetauscher (oder mit mehreren) führt somit zu einer wartungsfreundlichen, langlebigen und kostengünstige Lösung.

Es ist auch zweckmäßig, Plattenwärmetauscher, die von eine gemeinsamen Strahlpumpe (oder auch individuellen Strahlpumpen) versorgt werden zu kaskadieren, z.B. indem sie primärseitig und sekundärseitig parallel geschaltet werden. Auch dadurch kann das Druck-Liter-Produkt der einzelnen Einheiten (bestehend aus Strahlpumpe und Plattenwärmetauscher) unter der Grenze gehalten werden, die Abnahmepflichtigkeit bedeutet. Jeder Plattenwärmetauscher kann mit einer eigenen Sicherheits-Überwachungseinrichtung versehen sein. Damit entfällt die Abnahme- und Revisionspflicht für die gesamte Anlage. Die primärseitige Kaskadierung durch Parallelschaltung der Plattenwärmetauscher ist ohne gesonderte Symmetrierungsmaßnahmen möglich. Dies gilt auch für Teillastbetrieb. Die durch die Strahlpumpe auch im Teillastbetrieb erhöhte Durchströmung führt zu einer relativ gleichmäßigen Durchströmung aller Plattenwärmetauscher durch deren gesamten Arbeitsbereich hindurch.

Der Plattenwärmetauscher wird vorzugsweise im Gegenstrom betrieben, d.h. die Strömungsrichtung in den Spaltkanälen des Primärkanals ist entgegen der Strömungsrichtung in den Spaltkanälen des Sekundärkanals gerichtet. Für den Teillastfall hat dies den Vorzug, dass eine Überhitzung des sekundären Vorlaufs vermieden wird. Der Sekundärkreislauf hat keine Möglichkeit, sich aufgrund reduzierter Sekundärpumpleistung im Teillastgebiet auf die hohe Primärvorlauftemperatur von z.B. 200°C aufzuheizen. Vielmehr setzt die verminderter Primärvorlauftemperatur hier viel niedrigere Grenzen. Es kann somit auch dann, wenn primärseitig in Spitzenlastzeiten Heißwasser mit 200°C und hohem Druck ansteht, und sekundärseitig, aus welchen Gründen auch immer, kaum Wärme abgenommen wird, keine Überhitzung des Plattenwärmetauschers oder nachfolgender Komponenten auftreten.

Die Strahlpumpe erhöht sowohl bei Teillast als auch bei Volllast den Massenstrom in den Spaltkanälen des Wärmetauschers. Dadurch wird ein intensiverer Wärmeübergang von der Primärseite des Wärmetauschers zu seiner Sekundärseite ermöglicht (der Wärmewiderstand (k-Wert) nimmt mit zunehmender Strömungsgeschwindigkeit ab). Dieser Effekt ist sowohl bei volllast als auch bei Teillast messbar, wobei bei Teillast außerdem noch durch den erhöhten Massenstrom eine Vergleichmäßigung der Temperatur an dem Plattenwärmetauscher zu verzeichnen ist. Durch die erhöhte Durchströmung wird die enge Temperaturankopplung der Primärtemperaturen an die Sekundärtemperaturen ("Grädigkeit") noch verbessert.

Besonders vorteilhaft wirkt sich die Kombination von Plattenwärmetauscher und primärseitiger Strahlpumpe im Anfahrbetrieb aus. Bislang trifft bei Betriebsbeginn heißer Vorlauf (200°C) auf einen kalten Plattenwärmetauscher (20°C), mit katastrophalem Verschleißergebnis. Die Strahlpumpe sorgt hingegen für ein sanftes Hochfahren der Vorlauf-temperatur. Selbst wenn die Stahlpumpe von Null auf Voll geöffnet wird, wird durch die Beisaugung von zunächst sehr kaltem Rücklauf eine Temperaturabsenkung unter die sonst bei Volllast im Vorlauf z.B. herrschenden 140°C auf z.B. zunächst 70 oder 80°C erreicht. Mit der Zunahme der Rücklauftemperatur auf z.B. 70°C steigt dann auch die Vorlauftemperatur auf z.B. die genannten 140°C. Die Vermeidung plötzlicher Temperatursprünge an dem Plattenwärmetauscher dient auch der Vermeidung oder Begrenzung lokaler Temperaturdifferenzen.

Die Strahlpumpe ist mit einem Steuerorgan versehen, das den in ihren Eingang fließenden Fluidstrom reguliert. Ein solches Steuerorgan kann beispielsweise ein Ventilkegel sein, der mit der Treibdüse der Strahlpumpe zusammenwirkt. Das Steuerorgan der Strahlpumpe ist mit einer Stelleinrichtung verbunden, die zur Leistungsregulierung des Plattenwärmetauschers herangezogen werden kann. Die Stelleinrichtung wird direkt oder mittelbar über einen Regler von einem Temperaturfühler geführt. Vorzugsweise ist dieser Temperaturfühler mit dem Sekundärvorlauf des Plattenwärmetauschers verbunden. Dies ist aufgrund der geringen Wärmeträgheit des Plattenwärmetauschers möglich, ohne Regelschwingungen oder unzumutbare träge Regeleigenschaften zu erhalten.

Zusätzlich kann der die Strahlpumpe regulierende Regler oder eine andere Regeleinrichtung dazu genutzt werden, eine Umwälzpumpe anzusteuern, die den Wassertransport in dem Sekundärkreislauf des Wärmetauschers bewirkt. Es ist dabei möglich, den Massenstrom im Sekundärkreislauf im Teillastbetrieb abzusenken. Alternativ ist es möglich, die Pumpe in dem Sekundärkreislauf mit konstanter Leistung arbeiten zu lassen. Jedenfalls wird die Umwälzpumpe in dem Sekundärkreislauf so geführt, dass eine Mindestleistung an der Umwälzpumpe nicht unterschritten wird. Damit wird in jedem Fall eine sekundärseitige Mindestdurchströmung des Plattenwärmetauschers aufrecht erhalten.

Entsprechend der Erfindung ist der Regler der Strahlpumpe so eingestellt, dass die Temperaturdifferenz zwischen der primären Vorlauftemperatur und der primären Rücklauftemperatur des Plattenwärmetauschers in allen Betriebspunkten, d.h. sowohl bei Volllast als auch in allen denkbaren Teillastfällen unter 80° gehalten wird. Durch die Temperaturregelung des Sekundärvorlaufs ergibt sich außerdem im Wesentlichen ein konstanter Primärdruck an dem Plattenwärmetauscher. Dies wirkt extrem verschleißmindernd.

An dem primären Vorlauf und/oder an dem primären Rücklauf sind Temperatursensoren vorgesehen, um z.B. die primäre Überhitzung des Plattenwärmetauschers zu vermeiden. Eine Überhitzung des primären Rücklaufs kann z.B. vermieden werden, wenn dem Temperaturregler, dessen Aufgabe in der Konstanthaltung der Sekundärtemperatur auf einen Vorgabewert, für die Zeit der Rücklaufüberhitzung ein reduzierter Vorgabewert angeboten wird.

Bei einer bevorzugten Ausführungsform bilden die Strahlpumpe und der Plattenwärmetauscher eine vormontierte, aufeinander abgestimmte Baueinheit, die als solche an den Kunden ausgeliefert wird. Im weiter bevorzugten Falle, bilden der Plattenwärmetauscher und die Strahlpumpe eine integrierte Baueinheit, bei der die Strahlpumpe z.B. in den primären Vorlaufanschluss des Plattenwärmetauschers eingebaut ist. Damit wird der Betrieb des Plattenwärmetauschers mit Primärumlauf vorgegeben. Unter "Primärumlauf" wird dabei eine Betriebsart verstanden, bei der dem primärseitigen dem Heißwassernetz entnommenen Heißwasserstrom, der den Plattenwärmetauscher durchströmt, ein zusätzlicher Rücklaufwasserstrom in einem Kreislauf überlagert ist, so dass der primärseitig Massenstrom in dem Plattenwärmetauscher wenigstens das 1,5-fache des dem Heißwassernetz entnommenen Stoffstroms entspricht. Vorzugsweise wird jedoch mit höheren Beimischgraden gearbeitet, so dass ein Faktor von 2 oder 3 oder mehr zu verzeichnen ist.

Vorteilhafte Einzelheiten von Ausführungsformen der Erfindung sind Gegenstand der Zeichnung, der Beschreibung oder von Ansprüchen.

In der Zeichnung ist ein Ausführungsbeispiel der Erfindung veranschaulicht. Es zeigen:
- Figur 1: eine erfindungsgemäße Wärmetauschereinrichtung mit Plattenwärmetauscher und Strahlpumpe in schematisierter Darstellung,
- Figur 2: einen Plattenwärmetauscher für das System nach Figur 1 in schematisierter Schnittdarstellung und
- Figur 3: eine abgewandelte Ausführungsform eines Plattenwärmetauschers mit integrierter Strahlpumpe in schematisierter Darstellung.

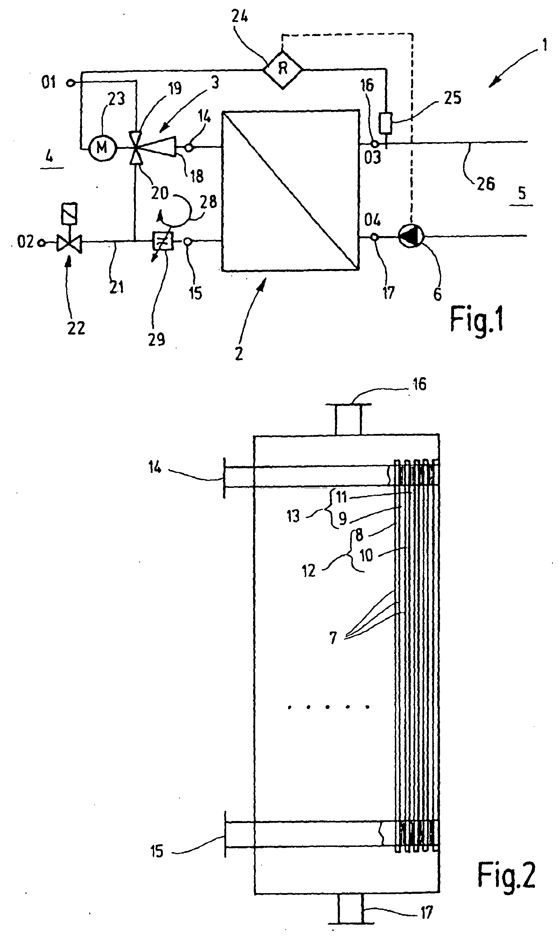

In Figur 1 ist eine Wärmetauschereinrichtung 1 veranschaulicht, zu der ein Plattenwärmetauscher 2 und eine Strahlpumpe 3 gehören. Die Wärmetauschereinrichtung dient der Wärmeübertragung von Heißwasser, das beispielsweise in einem Primärkreislauf 4 bereitsteht auf Warmwasser in einem Sekundärkreislauf 5. Der Primärkreislauf 4 ist beispielsweise Teil eines Heißwasser-Wärmeversorgungsnetzes, das, je nach Tageszeit, Heißwasser zwischen 140°C und über 200°C bereitstellt. Das Heißwasser steht dabei unter einem relativ hohen Druck von beispielsweise 20 bar. Dieser Druck kann im zeitlichen Tagesverlauf schwanken. Beispielsweise wird die Förderleistung der Umwälzpumpen des Primärkreislaufs 4 zu Spitzenlastzeiten erhöht, was zu einer erheblichen Druckerhöhung führen kann. Ebenso wird die Wassertemperatur erhöht. In Schwachlastzeiten wird die Förderleistung hingegen reduziert, was zu einem Druckabfall führen kann.

Der Sekundärkreislauf 5 ist beispielsweise ein Heizungskreis mit mehreren Heizkörpern. Die Zirkulation des als Wärmeträger dienenden Warmwassers wird hier durch eine Umwälzpumpe 6 bewirkt. Der Plattenwärmetauscher 2 trennt den Primärkreislauf 4 von dem Sekundärkreislauf 5. Er ist in Figur 2 schematisch veranschaulicht und weist eine größere Anzahl von zueinander parallelen, im Wesentlichen ebenen Blechen 7 auf, die randseitig miteinander verschweißt sind. Zwischen den Blechen 7 sind Spaltkanäle 8, 9, 10, 11 usw. ausgebildet. Die geradzahligen Kanäle 8, 10 usw. bilden dabei eine erste Gruppe 12 von Spaltkanälen während die ungeradzahligen Spaltkanäle 9, 11 eine zweite Gruppe 13 von Spaltkanälen bilden. Die Spaltkanäle 8, 10 der ersten Gruppe 12 sind dabei mit den Spaltkanälen 9, 11 der zweiten Gruppe 13 abwechselnd angeordnet. Die Spaltkanäle 8, 10 bzw. 9, 11 beider Gruppen 12, 13 sind jeweils gruppenweise zueinander strömungsmäßig parallel geschaltet, wobei die erste Gruppe 12 einen Primärkanal und die zweite Gruppe 13 einen Sekundärkanal festlegt. Der Primärkanal 12 und der Sekundärkanal 13 stehen in engem thermischen Kontakt. An die erste Gruppe 12 ist ein primärer Vorlaufanschluss 14 und eine primärer Rücklaufanschluss 15 angekoppelt. An die Kanäle der zweiten Gruppe 13 ist ein sekundärer Vorlaufanschluss 16 und sekundärer Rücklaufanschluss 17 angekoppelt. Die Spaltkanäle 8, 10 der ersten Gruppe 12 sind gegensinnig zu den Spaltkanälen 9, 11 der zweiten Gruppe 13 durchströmt.

An dem primären Vorlaufanschluss 14 ist die Strahlpumpe 3 mit ihrem Ausgang 18 angeschlossen. Außerdem weist die Strahlpumpe 3 einen Eingang 19 auf, der mit einem Heißwasservorlauf 01 verbunden ist. Ein Sauganschluss 20 der Strahlpumpe 3 list mit einer Rücklaufleitung 21 verbunden, die von dem primärseitigen Rücklaufanschluss 15 weg führt und mit einem Rücklauf 02 des Primärkreislaufs 4 verbunden ist. In der Leitung 21 kann ein Sicherheitsabsperrventil 22 angeordnet sein, das elektrisch offen gehalten wird und im stromlosen Zustand schließt, um Anlagenschäden zu vermeiden. Es kann auch ein druckluftbetätigtes Ventil sein, das bei Drucklufrausfall schließt.

Die Strahlpumpe 3 weist vorzugsweise ein Stellorgan, beispielsweise in Form eines Ventilkegels auf, das seiner Treibdüse zugeordnet ist, um diese zu verschließen, freizugeben oder graduell zu drosseln. Der Ventilkegel ist über eine entsprechende Stellstange mit einem Stellmotor 23 verbunden, der bedarfsweise positionsgeregelt arbeitet. Zum Ansteuern des Stellmotors 23 kann ein Regler 24 dienen, der beispielsweise mit einem Temperatursensor 25 verbunden ist. Der Temperatursensor 25 kann in den Plattenwärmetauscher 2 eingebaut sein, um insbesondere die an seinem sekundären Vorlaufanschluss 16 anstehende Temperatur zu erfassen. Alternativ kann der Temperatursensor 25 in eine von dem Vor laufanschluss 16 weg führende Leitung 26 eingebaut sein. Er erfasst die Vorlauftemperatur in dem Sekundärkreislauf 5. Der Regler 24 steuert in erster Linie den Stellmotor 23. Bedarfsweise kann er zusätzlich dazu herangezogen werden, die Umwälzpumpe 6 zu steuern. Im einfachsten Fall, beispielsweise um die Umwälzpumpe 6 bei Wärmenullbedarf nach einer gewissen Wartezeit stillzusetzen oder zu drosseln. Im einfachsten Falle kann die Umwälzpumpe 6 jedoch auch mit einer konstanten Leistung oder Drehzahl arbeiten. Der Regler kann auf eine vorgegebene Temperatur eingestellt sein und damit die Vorlauftemperatur in dem Sekundärkreislauf durch Beeinflussung der Strahlpumpe 3 konstant ausregeln. Es ist jedoch auch möglich, dem Regler 24 einen nichtkonstanten, z.B. zeitabhängigen Temperaturvorgabewert zur Verfügung zu stellen, so dass er die Strahlpumpe 3 einem Temperaturprofil gemäß reguliert.

In der Leitung 15 kann eine Justierdrossel 29 angeordnet sein. Diese dient dazu, zwischen dem Ausgang 18 und dem Sauganschluss 20 einen definierten gewünschten Druckabfall ^{a}p einzustellen, der die Durchströmung des Plattenwärmetauschers 2 festlegt. Die Justierdrossel kann manuell einstellbar sein.

Die insoweit beschriebene Wärmetauschereinrichtung 1 arbeitet wie folgt:
Es wird zunächst davon ausgegangen, dass in dem Sekundärkreislauf 5 ein gewisser Wärmebedarf vorliegt, die Umwälzpumpe 6 mit gegebener Drehzahl oder Leistung fördert und in dem Primärkreislauf Heißwasser, beispielsweise mit 180° und etwa 20 bar ansteht. Der Regler 24 öffnet nun die Strahlpumpe 3 durch Betätigung des Stellmotors 23, wodurch Heißwasser in den Eingang 19 der Strahlpumpe 3 einströmt und über den Sauganschluss 20 und eine dort angeschlossene Stichleitung Rücklaufwasser aus der Leitung 21 beisaugt. Das entstehende Wassergemisch hat eine Temperatur von z.B. etwa 140°C. Außerdem entsteht über der Strahlpumpe 3 ein Druckabfall von mehreren bar. Ist in der Rücklaufleitung 21 beispielsweise ein Druck von 17 bar vorhanden und fällt zwischen dem primären Vorlaufanschluss 14 und dem primären Rücklaufanschluss 15 ein Druckabfall Δp von beispielsweise 0,3 bar an, gibt die Strahlpumpe 3 an ihrem Ausgang 18 einen Ausgangsdruck von 17,3 bar ab. Der Massenstrom an dem Ausgang 18 der Strahlpumpe 3 ist deutlich größer als an dem Eingang 19. Er beträgt z.B. das 1,5-flache oder 2-fache des Massenstroms an dem Eingang 19. Die Rücklauftemperatur liegt beispielsweise bei 70°C oder 80°C. Primärseitig arbeitet der Wärmetauschers 2 somit mit einer Temperaturdifferenz von etwa 70°C.

Sinkt der sekundäre Wärmebedarf steigt die sekundäre Vorlauftemperatur zunächst an, was über den Temperatursensor 25 erfasst wird. Der Regler 24 steuert entsprechend gegen und schließt die Strahlpumpe 3 etwas. Damit wird der primäre Heißwasserzufluss zu dem Eingang 19 gedrosselt. Im Gegenzug nimmt die Beisaugung von Rücklaufwasser über den Sauganschluss 20 zu, so dass mit weiterhin hohem primärseitigen Massenstrom gearbeitet wird. Somit wird das Vordringen kleiner aber heißer Heißwasserportionen in die Primärseite des Wärmetauschers 2 und das Entstehen großer lokaler Temperaturgradienten mit der Folge mechanischer Verwerfungen unterbunden.

Steigt nun das primärseitigen Energieangebot an, beispielsweise weil sich das Heißkraftwerk auf Spitzenlast einstellt, kann die Temperatur an dem Anschluss 01 und somit an dem Eingang 19 der Strahlpumpe 3 auf über 200°C ansteigen. Außerdem kann ein Druckanstieg auf über 30 bar zu verzeichnen sein. Um ein Ansteigen der sekundären Vorlauftemperatur zu vermeiden, verstellt der Regler 24 die Strahlpumpe 3 etwas in Schließrichtung, wodurch der primäre Heißwasserfluss weiter gedrosselt wird. Insoweit kann auch der gestiegene Primärdruck nicht auf den Wärmetauschers 2 durchschlagen. Gleichzeitig wird die Beimischung von Rücklaufwasser über den Sauganschluss 20 weiter erhöht, so dass der primäre Massestrom an dem Wärmetauscher 2 weiterhin hoch ist. Bei einem Heißwasserangebot von über 200°C kann die Temperatur des an dem primären Vorlaufanschluss 14 anstehenden Wassers auf 140°C gehalten werden. Insoweit wird auch bei ungünstigen Lastfällen, d.h. eingangsseitigem Spitzenlastangebot und ausgangsseitiger geringer Energieabnahme keine Überhitzung des Plattenwärmetauschers 2 eintreten. Insbesondere aber wird das Auftreten von zu großen Temperaturgradienten an dem Plattenwärmetauscher 2 wie auch das Auftreten von Druckschwankungen unterbunden. Die Einheit aus Strahlpumpe 3 und Plattenwärmetauscher 2 hat somit gegenüber einer Kombination aus Plattenwärmetauscher und Regelventil eine wesentlich erhöhte Lebensdauer.

Zur Verbesserung der Lebensdauer wird ein Plattenwärmetauscher 2 mit einer Strahlpumpe 3 kombiniert, die den Plattenwärmetauscher 2 eingangsseitig regelt. Regelgröße ist dabei vorzugsweise die sekundäre Vorlauftemperatur. Die Temperaturgeregelte Strahlpumpe 3 hält den Primärdruck des Plattenwärmetauschers 2 im Wesentlichen konstant und zwar unabhängig von an ihr eingangsseitig anstehender Temperatur oder Druck.

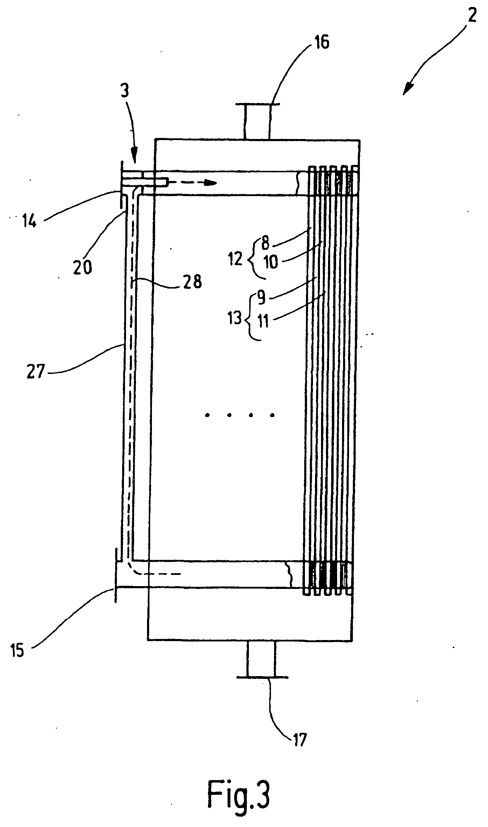

Figur 3 veranschaulicht eine abgewandelte Ausführungsform des Plattenwärmetauschers 2, die sich dadurch auszeichnet, dass die Strahlpumpe 3 in die primärseitige Vorlaufleitung bzw. den primärseitigen Vorlaufanschluss 14 integriert ist. Außerdem kann der Sauganschluss 20 der Strahlpumpe über eine fest installierte Stichleitung 27 mit dem zu dem primärseitigen Rücklauf 15 führenden Teil des Plattenwärmetauschers 2 verbunden sein. Diese Maßnahme hat den Vorzug, dass ein Einsatz des Plattenwärmetauschers 2 ohne primäre Rücklaufbeimischung nicht möglich ist. Es wird in jedem Fall ein den Primärkreislauf überlagernder Kreislauf 28 erzeugt, der in Figur 3 strichpunktiert und in Figur 1 symbolisch durch einen Rundpfeil 28 angedeutet ist. Der überlagerte Kreislauf 28 bewirkt eine Temperaturvergleichmäßigung und Beschleunigung der Durchströmung der Spaltkanäle 8, 10 der ersten Gruppe 12. Obwohl die Verweilzeit des primären Wärmeträgerfluids Wasser in den primären Spaltkanälen 8, 10 dadurch verkürzt ist und obwohl die Eingangstemperatur an diesen Spaltkanäle 8, 10 gemindert ist, wird insgesamt die Effizienz des Plattenwärmetauschers 2 im Teillastbetrieb nicht beeinträchtigt. Jedoch wird durch die Vergrößerung der Durchströmung, insbesondere bei extremem Teillastbetrieb und hohem primärseitigen Energieangebot, eine Beschädigung des Plattenwärmetauschers 2 durch unterschiedliche thermische Ausdehnungen von unterschiedlich warmen Abschnitten der einzelnen Platten 8 bis 11 oder sonstiger Teile desselben vermieden.

Die Strahlpumpe 3 kann mit einem Stellantrieb versehen sein, zu dem außer dem Stellmotor 23 noch eine Sicherheitsabsperreinrichtung 30 gehört. Diese dient dazu, die Strahlpumpe 3 zu schließen, wenn die Regelenergie bzw. das Regelsignal, d.h. der Strom für den Regler 24 oder auch Druckluft, zum Betrieb des Systems ausfällt. Entsprechend schließt in einem solchen Fall auch das Sicherheitsabsperrventil 22.

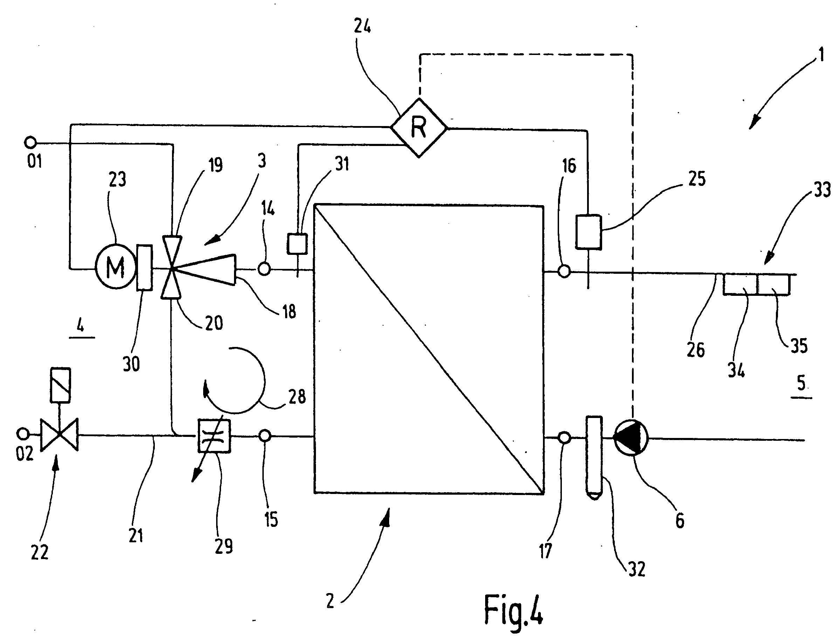

Diese Maßnahme hat den Vorzug, dass der Plattenwärmetauscher 2 im Falle eines Regelenergieausfalls sowohl seitens seines Vorlaufs als auch Seitens seines Rücklaufs von dem Primärkreislauf 4 getrennt wird. Beschädigung des Plattenwärmetauschers 2 ist dadurch ausgeschlossen. Eine entsprechende Konfiguration ist in Figur 4 veranschaulicht.

Weiter kann, wie aus Figur 4 hervorgeht, z.B. der primäre Vorlauf 14 mit einem Temperatursensor 31 versehen sein. Dieser kann dazu herangezogen werden, die Temperatur in dem Primärvorlauf 14 konstant zu halten oder wenigstens darauf hin zu überwachen, dass ein Grenzwert nicht überschritten wird. Der Grenzwert kann bspw. auf 140° eingestellt werden.

Ebenso kann an dem primären Rücklauf ein nicht weiter veranschaulichter Temperartursensor vorgesehen sein. Dieser kann dazu dienen zu verhindern, dass zu wenig ausgekühlter Rücklauf an den Primärkreislauf 4 abgegeben wird. Sollte eine erhöhte Rücklauftemperatur festgestellt werden, können verschiedene Gegenmaßnahmen getroffen werden, zu denen die Erhöhung der Pumpendrehzahl der Umwälzpumpe 6, die Absenkung der Solltemperatur für den Sekundärvorlauf 16 oder eine willkürliche Drosselung der Strahlpumpe 3 gehören.

Eine weitere Ergänzung kann das System gemäß Figur 4 durch einen Schmutzfänger 32 erfahren, der vorzugsweise an dem Sekundärrücklauf 17 angeordnet ist. Dieser verhindert eine Verschlammung der engen Kanäle des Plattenwärmetauschers 2 und somit eine allmähliche Verschlechterung von dessen Wirkung. Letztere hätte wegen der dann erhöhten Rücklauftemperatur nämlich auch ein Nachlassen der Kühlwirkung der Strahlpumpe 3 für den primären Vorlauf 14 zur Folge, was somit vermieden wird.

In weiterer Ergänzung kann das vorgestellte System, insbesondere an dem sekundären Vorlauf 16, d.h. an geeigneter Stelle der Leitung 26, eine Überwachungseinheit 33 aufweisen, die z.B. einen Sekundärtemperaturwächter 34 und/oder einen Sekundärdruckwächter 35 beinhaltet. Anstelle des sekundären Temperaturwächters kann auch ein Sekundärtemperaturbegrenzer vorgesehen sein. Ebenso kann anstelle des Sekundärdruckwächters ein Sekundärdruckbegrenzer vorgesehen sein. Der Unterschied zwischen dem Wächter und dem Begrenzer liegt darin, dass der Wächter bei Erkennung eines Fehlerzustands das System abschaltet, während der Begrenzer den eingestellten Maximalwert lediglich limitiert. Die Abschaltung des Systems kann durch eine nicht weiter veranschaulichte Wirkverbindung zu dem Regler 24 oder auch durch direkte Einflussnahme auf z.B. das Sicherheitsabsperrventil 22 bzw. die Sicherheitsabsperreinrichtung 30 erfolgen.

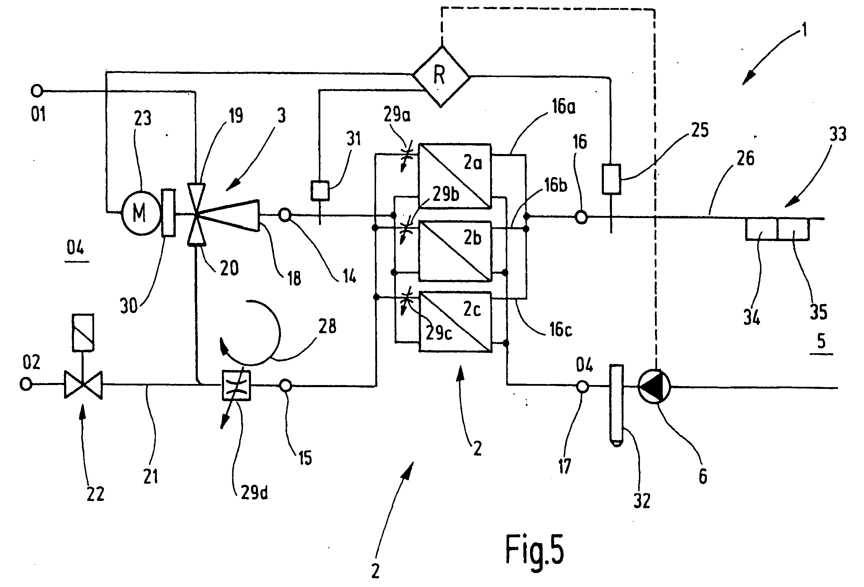

Figur 5 veranschaulicht eine weiter abgewandelte Ausführungsform der Wärmetauschereinrichtung 1, bei der anstelle eines einzigen Plattenwärmetauschers 2 mehrere z.B. zwei oder drei Plattenwärmetauscher 2a, 2b, 2c vorgesehen sind. Diese sind sowohl eingangsseitig als auch ausgangsseitig primär wie sekundär parallel geschaltet. Sie können gleiche oder unterschiedliche Leistungen aufweisen und werden bspw. von einer einzigen Strahlpumpe 3 gemeinsam gespeist. Vorzugsweise wird bei jedem Wärmetauscher 2a, 2b, 2c darauf geachtet, dass das Druck-Liter-Produkt unter einer Grenze liegt, die bspw. festlegt, ob die Wärmetauscher 2a, 2b, 2c durch einen eigens ermächtigten Überwachungsverein abgenommen und womöglich regelmäßig überwacht werden müssen. Durch den von der Strahlpumpe 3 auch bei Teillast abgegebenen großen Massenstrom an dem primären Vorlauf 14, teilen sich die Strömungen relativ gleichmäßig auf die drei Wärmetauschers 2a, 2b, 2c auf, so dass alle auch im Teillastfall aktiv bleiben können.

Alternativ können einzelne Wärmetauscher bei Teillast abgeschaltet werden.

Jedem Wärmetauscher 2a, 2b, 2c ist vorzugsweise eine eigene Justierdrossel 29a, 29b,29c vorgeschaltet, wobei diese Justierdrosseln 29a bis c dazu verwendet werden können, die Wärmetauscher 2a, 2b, 2c zu symnetrieren. Diese Symmetrierung gilt dann unveränderlich für den gesamten Betriebsbereich. Alternativ oder zusätzlich kann in der primären Rücklaufleitung 15 eine weitere Justierdrossel 20d vorgesehen werden.

Die Wärmetauschers 2a, 2b, 2c können sekundärseitig eine gemeinsame Leistung 26 speisen, an der die Überwachungseinheit 33 sitzt. Alternativ können die Ausgänge der einzelnen Wärmetauschers 2a, 2b, 2c mit jeweils gesonderten Überwachungseinheiten versehen sein, die hier nicht weiter veranschaulicht sind.

Desweiteren können an den sekundären Vorläufen 16a, 16b 16c der Wärmetauscher 2a, 2b, 2c Drosselventile zur Leistungssymmetrierung angeordnet sein (nicht dargestellt). Auch können den einzelnen Wärmetauschern 2a, 2b, 2c gesonderte Schmutzfänger vorgeschaltet sein. Es ist desweiteren möglich, die Schmutzfänger mit den Wärmetauschern zu baulichen Einheiten zu integrieren.

Zur Verbesserung der Lebensdauer wird ein Plattenwärmetauscher (2) mit einer Strahlpumpe (3) kombiniert, die den Plattenwärmetauscher (2) eingangsseitig regelt. Regelgröße ist dabei vorzugsweise die sekundäre Vorlauftemperatur. Die Temperaturgeregelte Strahlpumpe (3) hält den Primärdruck des Plattenwärmetauschers (2) im Wesentlichen konstant und zwar unabhängig von an ihr eingangsseitig anstehender Temperatur oder Druck.

## Patentansprüche

1. Wärmetauschereinrichtung (1), insbesondere für Heißwasser -Wärmeverteilungsanlagen,
mit einem Plattenwärmetauscher (2), der eine Anzahl von zueinander parallelen Blechen (7) aufweist, zwischen denen Spaltkanäle (8, 9, 10, 11) definiert sind, wobei eine erste Gruppe (12) von Spaltkanalen (8, 10) strömungsmäßig parallel geschaltet ist und zusammen einen Primärkanal bildet, der mit einem primären Vorlaufanschluss (14) und mit einem primären Rücklaufanschluss (15) verbunden ist, und wobei eine zweite Gruppe von Spaltkanälen (9, 11) strömungsmäßig parallel geschaltet ist und zusammen einen Sekundärkanal bildet, der mit einem sekundären Vorlaufanschluss (16) und mit einem sekundären Rücklaufanschluss (17) verbunden ist, wobei die Spaltkanäle (8, 10) der ersten Gruppe (12) und die Spaltkanäle (9, 11) der zweiten Gruppe (13) miteinander abwechseln angeordnet sind,
mit einer Strahlpumpe (3), die einen Eingang (19), einen Ausgang (18) und einen Sauganschluss (20) aufweist, wobei der Ausgang (18) mit dem primären Vorlaufanschluss (14) des Plattenwärmetauschers (2), der Sauganschluss (20) mit dem primären Rücklaufanschluss (15) des Plattenwärmetauschers (2) und der Eingang (19) mit einem Heißwasservorlauf (01) verbunden ist und wobei auf der Primärseite des Plattenwärmetauschers weder eingangsseitig noch ausgangsseitig Druckregel-, Druckbegrenzungs- oder Mengenbegrenzungsventile vorgesehen sind,
mit einem Temperaturfühler (31, 25) und einem Regler (24), der mit dem Temperaturfühler (31, 25) verbunden ist,
wobei die Strahlpumpe (3) ein Steuerorgan aufweist, um den in den Eingang (19) fließenden Fluidstrom zu regulieren,
wobei das Steuerorgan mit einer Stelleinrichtung (23) zur Leistungsregulierung des Plattenwärmetauschers (2) verbunden ist und
wobei die Stelleinrichtung (23) von einem Temperaturfühler (31, 25) geführt werden kann,
wobei der Temperaturfühler (25, 31) mit einem Regler (24) verbunden ist, der seinerseits mit der Stelleinrichtung (23) verbunden ist,
wobei der Temperaturfühler (31, 25) an dem sekundären Vorlaufanschluss (16) oder an einer von diesem weg führenden Leitung (26) angeordnet ist,
wobei der Regler (24) derart eingestellt ist, dass die Temperaturdifferenz (ΔT) zwischen der primäre Vorlauf-temperatur (T_{primVorl}) und der primären Rücklauftemperatur (T_{primRückl}) des Plattenwärmetauschers (2) in allen Betriebspunkten des Plattenwärmetauschers unter 80 grd gehalten wird,
wobei der Regler (24) derart eingestellt ist, dass in allen Betriebspunkten des Plattenwärmetauschers (2) der Druck (p+Δp) des an dem Vorlaufanschluss (14) anstehenden Heißwasser-Rücklaufwasser-Gemischs gleich der Summe des Drucks (p) des Rücklaufwassers an dem primären Rücklaufanschluss (15) und einem durch die Durchströmung des Plattenwärmetauschers (2) verursachten Druckabfalls (Δp) ist.

2. Wärmetauschereinrichtung nach Anspruch 1, **dadurch gekennzeichnet, dass** die Strahlpumpe (3), ausschließlich anhand der Temperatur des Sekundärvorlaufs geregelt arbeitet.

3. Wärmetauschereinrichtung nach Anspruch 1, **dadurch gekennzeichnet, dass** die Strahlpumpe (3) und der Plattenwärmetauscher (2) eine integrierte Baueinheit bilden.

4. Wärmetauschereinrichtung nach Anspruch 1, **dadurch gekennzeichnet, dass** die Strahlpumpe (3) in den primären Vorlaufanschluss (14) des Plattenwärmetauschers (3) eingebaut ist.

5. Wärmetauschereinrichtung nach Anspruch 1, **dadurch gekennzeichnet, dass** der primäre Rücklaufanschluss (15) mit einem Sicherheitsabsperrventil (22) versehen ist.

6. Wärmetauschereinrichtung nach Anspruch 1, **dadurch gekennzeichnet, dass** die Strahlpumpe (3) eine Sicherheitsabsperreinrichtung (30) aufweist,

7. Wärmetauschereinrichtung nach Anspruch 5 oder 6, **dadurch gekennzeichnet, dass** das Sicherheitsabsperrventil (22) und/oder die Sicherheitsabsperreinrichtung (30) bei Ausfall eines Ansteuersignals schließen.

## Claims

1. Heat exchanger arrangement (1), in particular for hot water heat distribution assemblies,
with a plate exchanger (2), which has a number of plates (7) parallel to one another, between which gap channels (8, 9, 10, 11) are defined, wherein a first group (12) of gap channels (8, 10) is connected in parallel with respect to flow and together form a primary duct, which is connected to a primary flow connection (14) and to a primary return flow connection (15), and wherein a second group of gap channels (9, 11) is connected in parallel with respect to flow and together form a secondary duct, which is connected to a secondary flow connection (16) and to a secondary return flow connection (17), wherein the gap channels (8, 10) of the first group (12) and the gap channels (9, 11) of the second group (13) are arranged to alternate with one another,
with a jet pump (3), which has an inlet (19), an outlet (18) and a suction connection (20), wherein the outlet (18) is connected to the primary flow connection (14) of the plate exchanger (2), the suction connection (20) is connected to the primary return flow connection (15) of the plate exchanger (2) and the inlet (19) is connected to a hot water flow pipe (01) and wherein on the primary side of the plate exchanger there are no pressure control, pressure restriction or volume restriction valves provided either on the inlet side or the outlet side,
with a temperature sensor (31, 25) and a controller (24), which is connected to the temperature sensor (31, 25),
wherein the jet pump (3) has a control member to regulate the fluid flow flowing into the inlet (19),
wherein the control member is connected to a regulating means (23) to regulate the output of the plate exchanger (2), and
wherein the regulating means (23) can be guided by a temperature sensor (31, 25),
wherein the temperature sensor (31, 25) is connected to a controller (24), which is itself connected to the regulating means (23),
wherein the temperature sensor (31, 25) is arranged on the secondary flow connection (16) or on a pipe (26) leading away from this,
wherein the controller (24) is adjusted in such a manner that the temperature difference (ΔT) between the primary flow temperature (T_{primVorl}) and the primary return flow temperature (T_{primRuckl}) of the plate exchanger (2) is held below 80 degrees in all operating points of the plate exchanger,
wherein the controller (24) is adjusted in such a manner that in all operating points of the plate exchanger (2) the pressure (p+Δp) of the hot water-return flow water mixture present at the flow connection (14) is equal to the sum of the pressure (p) of the return flow water at the primary return flow connection (15) and a pressure drop (Δp) caused by the flow through the plate exchanger (2).

2. Heat exchanger according to claim 1, **characterised in that** the jet pump (3) operates solely controlled on the basis of the temperature of the secondary flow.

3. Heat exchanger according to claim 1, **characterised in that** the jet pump (3) and the plate exchanger (2) form an integrated structural unit.

4. Heat exchanger according to claim 1, **characterised in that** the jet pump (3) is incorporated into the primary flow connection (14) of the plate exchanger (3).

5. Heat exchanger according to claim 1, **characterised in that** the primary return flow connection (15) is provided with a safety shutoff valve (22).

6. Heat exchanger according to claim 1, **characterised in that** the jet pump (3) has a safety shutoff device (30).

7. Heat exchanger according to claim 5 or 6, **characterised in that** the safety shutoff valve (22) and/or the safety shutoff device (30) close upon failure of an actuation signal.

## Revendications

1. Dispositif échangeur de chaleur (1), en particulier pour installations de distribution de chaleur à eau chaude,
comprenant un échangeur de chaleur à plaques (2) qui présente un certain nombre de tôles (7) parallèles les unes aux autres, entre lesquelles sont définis des canaux capillaires (8, 9, 10, 11), un premier groupe (12) de canaux capillaires (8, 10) étant connectés en parallèle du point de vue écoulement et formant ensemble un canal primaire qui est relié à un raccord d'arrivée primaire (14) et à un raccord de retour primaire (15), et un deuxième groupe de canaux capillaires (9, 11) étant connectés en parallèle du point de vue écoulement et formant ensemble un canal secondaire qui est relié à un raccord d'arrivée secondaire (16) et à un raccord de retour secondaire (17), les canaux capillaires (8, 10) du premier groupe (12) et les canaux capillaires (9, 11) du deuxième groupe (13) étant disposés en alternance les uns avec les autres,
comprenant une pompe à jet (3) qui présente une admission (19), une sortie (18) et un raccord d'aspiration (20), la sortie (18) étant reliée au raccord d'arrivée primaire (14) de l'échangeur de chaleur à plaques (2), le raccord d'aspiration (20) étant relié au raccord de retour primaire (15) de l'échangeur de chaleur à plaques (2), et l'admission (19) étant reliée à une arrivée d'eau chaude (01), et sachant que sur le côté primaire de l'échangeur de chaleur à plaques, ne sont prévus, ni côté entrée ni côté sortie, des vannes de régulation de pression, des limiteurs de pression ou des limiteurs de débit,
comprenant un capteur de température (31, 25) et un régulateur (24) qui est connecté au capteur de température (31, 25),
la pompe à jet (3) présentant un organe de commande pour réguler le flux de fluide entrant dans l'admission (19),
l'organe de commande étant connecté à un dispositif de réglage (23), en vue de réguler la puissance de l'échangeur de chaleur à plaques (2), et
le dispositif de réglage (23) pouvant être piloté par un capteur de température (31,25),
le capteur de température (25, 31) étant connecté à un régulateur (24) qui est connecté à son tour au dispositif de réglage (23),
le capteur de température (31, 25) étant disposé sur le raccord d'arrivée secondaire (16) ou sur une conduite (26) partant de celui-ci,
le régulateur (24) étant réglé de manière telle que la différence de température (ΔT) entre la température d'arrivée primaire (T_{primVorl}) et la température de retour primaire (T_{primRückl}) de l'échangeur de chaleur à plaques (2) soit maintenue en dessous de 80 degrés dans tous les points de fonctionnement dynamique de l'échangeur de chaleur à plaques,
le régulateur (24) étant réglé de manière telle que dans tous les points de fonctionnement dynamique de l'échangeur de chaleur à plaques (2), la pression (p+Δp) du mélange eau chaude-eau de retour, se présentant au raccord d'arrivée (14), soit égale à la somme de la pression (p) de l'eau de retour sur le raccord de retour primaire (15) et d'une baisse de pression (Δp) provoquée par le passage dans l'échangeur de chaleur à plaques (2).

2. Dispositif échangeur de chaleur selon la revendication 1, **caractérisé par le fait que** la pompe à jet (3) fonctionne exclusivement en étant régulée à l'aide de la température de l'arrivée secondaire.

3. Dispositif échangeur de chaleur selon la revendication 1, **caractérisé par le fait que** la pompe à jet (3) et l'échangeur de chaleur à plaques (2) forment un ensemble de construction intégré.

4. Dispositif échangeur de chaleur selon la revendication 1, **caractérisé par le fait que** la pompe à jet (3) est montée dans l'arrivée primaire (14) de l'échangeur de chaleur à plaques (2).

5. Dispositif échangeur de chaleur selon la revendication 1, **caractérisé par le fait que** le raccord de retour primaire (15) est doté d'une soupape d'arrêt de sécurité (22).

6. Dispositif échangeur de chaleur selon la revendication 1, **caractérisé par le fait que** la pompe à jet (3) présente un dispositif d'arrêt de sécurité (30).

7. Dispositif échangeur de chaleur selon la revendication 5 ou 6, **caractérisé par le fait que** la soupape d'arrêt de sécurité (22) et/ou le dispositif d'arrêt de sécurité (30) se ferment en cas de défaillance d'un signal d'activation.
